# EUROPEAN PATENT SPECIFICATION

(11) **EP 3 278 035 B1**
(45) Date of publication and mention of the grant of the patent: **06.11.2019**
(21) Application number: 16725621.3
(22) Date of filing: 30.03.2016
(51) Int. Cl.: F24D 3/02, F24H 1/10, F24H 9/20, F24D 19/10

(54) **IMPROVED OPERATION COMBI BOILER AND AN ASSOCIATED COMBI BOILER OPERATIONAL EFFICIENCY DEVICE**
KOMBITHERME MIT VERBESSERTEM BETRIEB UND ZUGEHÖRIGE BETRIEBSEFFIZIENZVORRICHTUNG FÜR KOMBITHERME
CHAUDIÈRE MIXTE DONT LE FONCTIONNEMENT EST AMÉLIORÉ ET DISPOSITIF D'EFFICACITÉ DE FONCTIONNEMENT DE CHAUDIÈRE MIXTE ASSOCIÉ

(30) Priority: 31.03.2015 TR 201503906
(43) Date of publication of application: 07.02.2018
(73) Proprietor: Memur, Hamit, Bagcilar/Istanbul (TR)
(72) Inventor: Memur, Hamit, Bagcilar/Istanbul (TR)
(74) Representative: Berkkam, Ayfer
(86) International application number: PCT/TR2016/050091
(87) International publication number: WO 2016/159914

(56) References cited:
- EP-A2- 0 098 449
- DE-A1- 4 211 914
- GB-A- 2 466 075

## Description

This invention relates to the innovation made in operation system of main card software of combi boilers used in houses, workplaces and everywhere heated centrally and to the properties pertaining to Combi Boiler Saving Device to be mounted independently on current combi boilers containing this innovation in itself.

In the current technology, as long as the heating function is enabled in combi boilers, it runs with a logic that adopts continuous operation of the combi boiler as a principle, accordingly, continuous water circulating pump motor (carrying modulation feature on water pump combi, working principle is the same) makes the water in radiators pass over the combi boiler by absorbing it and measures the temperature of the water, when the main card reads that the water temperature has dropped below the temperature value in the program selected by the user, combi boiler starts heating function and heats the water within the system, the combi boiler which heats the water up to the measuring range processed previously on the main card continues to operate with an infinite loop fulfilling this duty continually.

Due to the fact that the minimum temperature value of the return water in radiators in current combi boilers is a value far above the environment temperature to be heated, even if the combi boilers are operated in summer, combi boiler starts heating process and increases the temperature of the environment to be heated, this case causes additional energy loss.

All combi boilers in the market operate in a certain range, water coming from the radiator is far above the environment temperature. For example, ideal temperature for the environment to be heated is 24 to 28 degrees, however, current combi boilers activate at a temperature of 35 or 40 degrees which is a higher temperature than this temperature and heat the mains water up to 40 or 50 degrees or a temperature above them and the combi boiler proceeds to sleep mode when it makes the mains water to an upper degree, due to this application, heat loss increases in chimneys of combi boilers.

A main card according to the preamble of claim 1 is known from the document DE4211941A1. Meanings of some words mentioned in the representation of the present invention can be summarized as follow:
- Main card pertaining to the invention: The electronic circuit located in all combi boilers and constituting the brain of the combi boiler and commanding it. The present invention adds the following improvements to this electronic circuit, the main card which measures the atmospheric temperature puts the combi boiler into heating or not heating function, based on the measured temperature, when the outside air coldness drops below the predetermined value in the program, it automatically puts the combi boiler into heating function and starts the blazing process and ensures that all equipment of the combi boiler operates in the meantime and shuts off the water pump with the termination of blazing, in some models, second-based water pump is stopped with delay, the main card operates the combi boiler in accordance with the right program by measuring the atmospheric temperature based on the program selected by the user and determines the operation time (blazing time) of the combi boiler and stopping time of the water pump, carries out this proves for an infinite loop.
- Start/stop button: When this button is pressed, combi boiler is continuously operated during the time defined in main card, this property has been developed for using hot water in combi boiler saving device however it will also be available in the main card to be inserted in the combi boilers which will be manufactured newly, in order for the house or the relevant space to be heated rapidly when returned from a holiday, this function is a property that is also available in main card of combi boilers to be manufactured newly.
- T1, T2, ... buttons: The function of these buttons is that they contain climatic software, the user selects the operation program of the combi boiler and becomes able to change the operation (blazing) time of his own combi boiler and stopping times of water pump (stopping time of all equipment of combi boiler in combi boiler saving device).
There is an (Electronic card) main card that constitutes the brain part of the combi boilers available in the market. However, there is no main card (Electronic card) that contains functional properties such as proposed by the present invention. While the present invention is presented as main card for the combi boilers to be manufactured newly, this main card will be presented as a device saving energy in combi boilers by being integrated to the electric network feeding the combi boiler within an independent device (Combi Boiler Saving Device) for the combi boilers currently utilised by the users. Within this scope, it is aimed at integrating combi boiler saving devices in different models for the combi boilers in use while the innovation made in the operation system of combi boiler's main card software is presented to the combi boiler manufacturers as a product in the form of an alternative solution as main card and additional equipment indicated in drawings. This main card (Electronic card) can be integrated to the combi boilers to be manufactured newly and be used inside the combi boiler.

The invention contains the principle of measuring the atmospheric temperature of the combi boilers and accordingly starting and stopping of combi boilers (including water circulating pump). Due to the fact that the current combi boilers continuously keep the water circulating pump in operating condition, they cause a critical heat loss on the installation between the radiators and combi boiler. These installations absorb the heat due to the fact that they are located on external column line of buildings and the energy in the hot water heated by the combi boiler is absorbed by the block and transmitted to the exterior surface of the building and to the atmosphere. Main card (Electronic card) developed in the present invention ensures that the combi boilers operate with the principle of start-stop, thus, the circulation pump also stops and reduces the heat loss on the installation seriously.

The main card (Electronic card) developed in the invention calculates how much heat the combi boiler should generate by measuring the atmospheric temperature and accordingly operates the combi boiler for a certain period (Combi operates during blazing), stops the water circulation pump until the next heat generation period (until the next blazing) as well as carrying out all processes in current combi boilers; in the model of combi boiler saving device, electrical current is delivered to the combi boiler for a certain period based on the atmospheric temperature, if the winter setting is selected, combi boilers generate thermal energy by activating the combi boiler's blazing system within this period, when the thermal energy required by the user is provided (termination of blazing), the device de-energizes the entire combi boiler and the combi boiler saving device stops the entire combi boiler including the water pump, the main card (Electronic card) program determines the operation and discontinuation range (including water circulating pump) based on the external atmospheric temperature and continues this process for infinite loop.

This main card (Electronic card) to be inserted into current combi boilers increases energy efficiency by minimizing heat loss in combi boilers and also reduces the heat loss of combi boiler's chimney. Main card provides a critical energy saving at climatic transition phases, especially ensures that the chimney temperature reduces. In spring and autumn when the external atmospheric temperature is slightly cool, as the temperature in return water decreases much due to the lowness of the energy quantity required to be generated by the combi boiler, the heat is absorbed much better by the return water in the combustion chamber within the combi boiler and the temperature of the chimney declines and the combi boiler's efficiency increases. Intended for the current combi boilers, this main card (Electronic card) enhances the efficiency in combi boilers by being integrated into the electrical network feeding the combi boiler within an independent device (combi boiler saving device).

Within the scope of the present invention, digital and analogue devices can be envisaged in different models and due to the system of combi boiler's main card, a program identification can be made through the atmospheric temparture absorbed by the hermetic and condensing combi boilers by measuring through chimney of the combi boiler as well as the external atmospheric temperature can be measured by an independent sensor by the integration of the main card (Electronic card) into the combi boilers to be manufactured newly, The software operates the combi boiler according to the energy required with reference to the atmospheric temperature, includes the logic of stopping the water pump of the combi boiler until the next energy requirement, thus, energy is saved due to the fact that the water pump of the combi boiler is stopped.

A device containing this main card (Electronic card) may be adapted into the current combi boilers over the power line and will be offered as a combi boiler saving device for the current combi boilers with this property of it.

Main card software used in combi boiler saving devices calculate the energy quantity required by the user and operates the combi boiler transiently during this period (operates the water pump during blazing), this is an improvement containing the principle of stopping the water pump of the combi boiler until the time when the heating requirement of the user will arise again and the operation system of software operates with this scheme. Water flow sensor is a property to be offered to the users as an optional property in combi boiler saving devices; water flow sensor is an essential property in our main card used in the combi boiler.

Current combi boilers operate with the principle of operating the continuous water circulating pump and don't include a program based on atmospheric temperature. In some models of current combi boilers, there is a program set for the water not to freeze within the combi boiler and damage it, this program doesn't make the combi boiler provide an energy saving, there is a thermostat measuring the atmospheric temperature, the aim of this program is to operate the combi boiler at some time intervals for preventing the water inside the combi boiler from freezing, this application has no concern with the software property containing our invention, also in some combi boilers, software which include stopping of the pump in order for the circulating pump not to burn due to heating at high temperature, this software doesn't pursue the goal of saving energy as well and they have no concern with the present invention's approach; the product and the main card developed calculates the energy required to be generated by the combi boiler by carrying out all the functions of the electronic cards in current combi boilers, and additionally by measuring the external atmospheric temperature and calculates how long the sleep mode will last while transmitting this energy to the radiators through water pump and provides energy saving in terms of natural gas and electricity consumption inactivating the circulating motor of the combi boiler.

Main card (contains main card software) and/or main card (Electronic card) connected to it includes the operation of combi boilers for a certain period and stopping of the circulating motor.

Improvement (contains main card software) made in main card (Electronic card) and/or operation system of the combi boiler's main card software contains the operational system software, determining the time interval of operating (blazing time) and stopping (includes the logic of stopping combi boiler's heating including water circulating pump) based on the energy required to be generated by the combi boiler based on the atmospheric temperature.

When the main card (Electronic card) is integrated into the combi boilers or alternatively the device according to the present invention containing this software are adapted into the combi boiler, they include the following operating logic as well; after the required energy quantity is generated and the blazing of the combi boiler stops through the operational scheme, water circulating pump is stopped with a short delay, thanks to this application, corrosions to arise on the inner surface of heating radiator (burner) in combustion chamber of the combi boiler are reduced and the the life of this part is prolonged.

Thanks to the improved operational system of the combi boiler's main card, the user will be able to set the condition of operating the combi boiler by the right software (the software containing the blazing time and discontinuation times) located in the main card (Electronic card) switching over the device or pressing T1, T2... buttons, based on the condition of climatic cooling because external environment temperature sensor is not used in some models. This property may also be added to the combi boilers to be manufactured newly.

When the main card (Electronic card) is inserted into the combi boiler, no difficulty will be experienced in its use within the combi boiler as it will operate directly connected to the water flow switch inside the combi boiler, heat sensor measuring the temperature of the radiator water, three-way valve, chimney sensor and other equipment of combi boiler. When the main card (Electronic card) is inserted into the combi boiler, it will save energy (Natural Gas and Electricity) stopping the circulating motor and generating energy as necessary based on the software contained, by measuring the atmospheric temperature additionally. According to the present invention, the combi boiler saving device will be adapted into the combi boilers through the mains electricity to cut off whole electricity of the current combi boilers and will operate the combi boiler according to this program. An on/off button will in this case activate the use of hot water on the combi boiler saving device as an optional property and also a sensor inlet which runs dependent on the device and reads the command information from water flow sensor to be inserted into the inlet of the city water will be available and will deliver electric current to the combi boiler in line with the information coming from here, in order for allowing users to use hot water; a button containing time relay start/stop function for combi boiler users who are not convenient to use water flow sensor in combi boilers can be in use. The products containing the main card and shown in the technical drawings may also be adapted into the combi boilers manufactured newly and may make the combi boiler save by reading the information from the atmospheric temperature sensor and defining the operation and discontinuation times for the combi boiler.

Main card software, may be introduced as main card software into the combi boilers manufactured newly; moreover, these models may be offered to the combi boilers in current use as a product by being manufactured in the form of combi boiler saving device, if needed, different models containing the software mentioned may also be manufactured according to the climatic conditions of the countries.

This invention is hereafter described in more details only via illustration by mentioning the drawings attached, in these drawings;

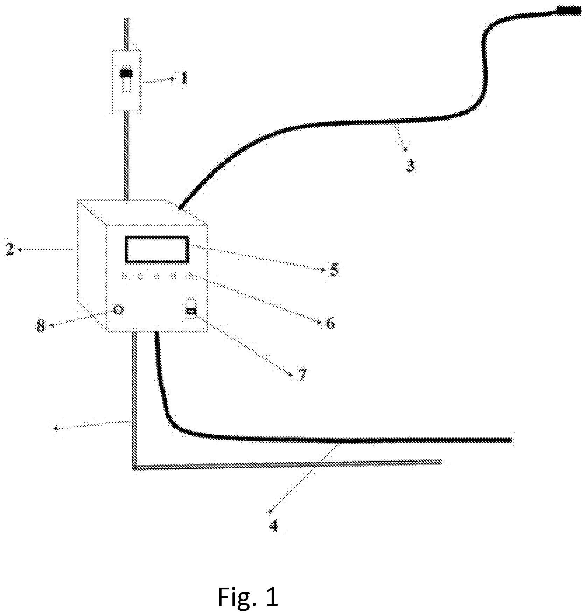

Figure 1 Schematic digital model of the combi boiler saving device and a first model thereof couplable to new combi boilers according to the present invention.

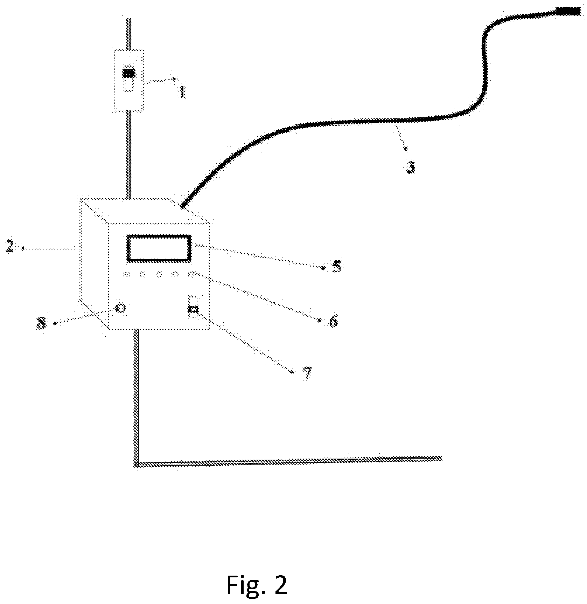

Figure 2 Schematic digital model of the combi boiler saving device and a second model thereof couplable to new combi boilers according to the present invention.

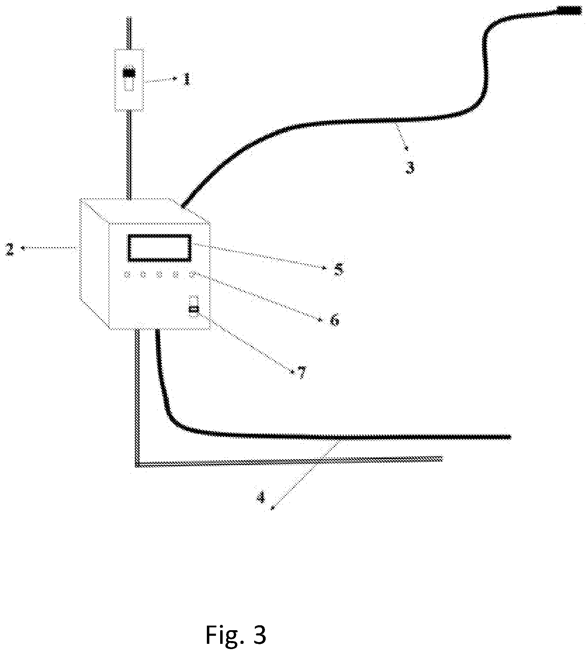

Figure 3 Schematic digital model of the combi boiler saving device and a third model thereof couplable to new combi boilers according to the present invention.

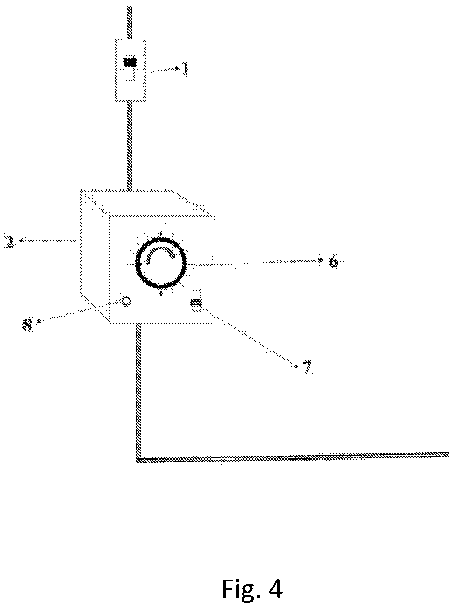

Figure 4 Schematic analogue digital model of the combi boiler saving device and a first model thereof couplable to new combi boilers according to the present invention.

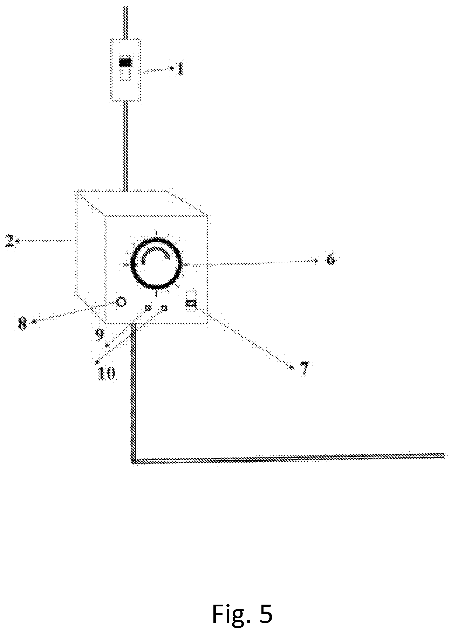

Figure 5 Schematic analogue digital model of the combi boiler saving device and a second model thereof couplable to new combi boilers according to the present invention

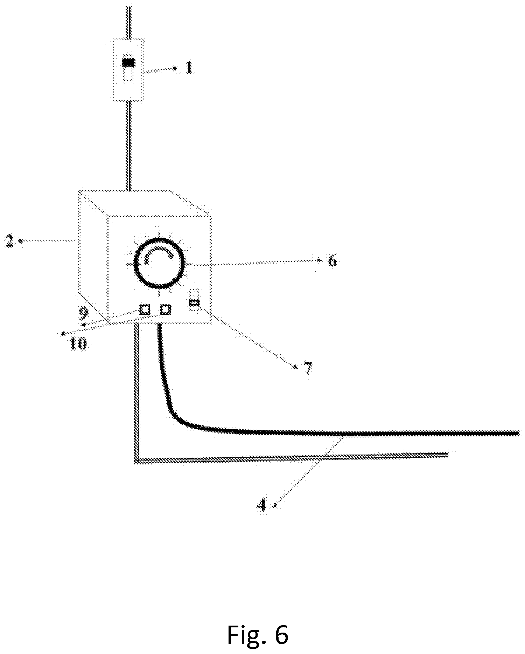

Figure 6 Schematic analogue digital model of the combi boiler saving device and a third model thereof couplable to new combi boilers according to the present invention.

**Explanation of the References:**

| NO | PART NAME |
|---|---|
| 1 | Fuse (fuse of electrical installation) |
| 2 | Main card (main card, combi saving device containing main card software) |
| 3 | Sensor measuring atmospheric temperature |
| 4 | Water flow sensor |
| 5 | Digital indicator |
| 6 | Setting knobs |
| 7 | On-off button |
| 8 | Start/stop button |
| 9 | T1 button |
| 10 | T2 button |

In the invention; the innovation made in operation system of the combi boiler's main card software and combi boiler's main card containing this software, combi boiler buttons and combi boiler saving device to be mountable to combi boilers independently, which are used at homes, workplaces and everywhere heated centrally consist of fuse (fuse of electrical installation) (1), main card (main card, combi boiler saving device containing main card software) (2), sensor measuring the atmospheric temperature (3), water flow sensor (4), digital indicator (5), setting knobs (6), on-off button (7), start/stop button (8), T1 buttom (9), T2 button (10), combi boiler connecting cable as per the general structure.

In line with the present invention, the operation system of the combi boiler's main card software determines the operation and sleep time of the combi boiler by continuously measuring the atmospheric temperature with the sensor (3) measuring the atmospheric temperature thanks to the software in the main card (main card, combi boiler saving device) (2) to be adapted into the combi boilers; combi boiler and its equipment is activated by taking electricity thanks to this main card (main card, combi boiler saving device containing main card software) (2); the combi boiler fulfills its heating function in accordance with the software by taking its electricity from the main card (main card, combi boiler saving device containing main card software) (2) or equipment containing main card (main card, combi boiler saving device containing main card software) (2) shown in the drawings.

Main card (main card, combi boiler saving device containing main card software) (2) can stop the operation of the combi boiler (blazing) and of the relevant equipment by cutting off the electricity of the combi boiler thanks to combi boiler connecting cable and by the external atmosphere temperature, the sensor measuring the atmospheric temperature (3); Main card (2) can continue the process of stopping (stopping water pump during the time when blazing doesn't take place) and operating (operating the water circulating pump during blazing) the combi boiler with infinite loop; when the user will use the hot water, water flow sensor (4) gives command for hot water to the main card (2) software, main card carries out this process by delivering the electricity to all relevant equipment of the combi boiler and operating all combi boiler equipment (When the user needs hot water, the device of the water flow sensor (4) transmits the command for hot water to the combi boiler saving device and the latter device carries out this process by powering the combi boiler).

In the combi boiler saving device, the user can keep the combi boiler active/passive as long as he needs hot water by inactivating the device via on-off button (7) on the device; Also combi boiler saving device can use this button having the property of time relay start/stop (8) for use of hot water and enabling all equipment of the combi boiler to operate continuously during a certain period; also the device can operate in two different modes (these modes of use can be increased according to the models) via T1 button (9) and T2 button (10) located on the device, this condition can be seen on digital indicator (5).

When T1 button (9) on the main card (2) to be used in combi boiler saving devices and new combi boilers is pressed, the software in the main card (2) prepared for regions with hot climate is activated and the combi boiler can operate in accordance with the climatic conditions of this region, when T2 button (10) on the device is pressed, the software in the main card (2) prepared for regions with cold climate is activated and the combi boiler can operate in accordance with the climatic conditions of this region; this functional property can be declined to a single function as well as it can be increased (T1, T2, T3...) depending on the climatic conditions of countries, in this case, T1 button property may not be added to the devices. These climatic program setting buttons (9, 10) can be configured as a single rotary switch button.

The equipment and the main card (2) developed in the invention to be adapted into the combi boilers to be manufactured newly ensure that the combi boilers operate with the principle of start-stop (ensures it with the logic of operating the combi boiler during blazing and stopping the water pump until the next blazing time), thus, circulating pump stops and it can seriously reduce the heat loss on the installation.

The equipment and the main card (2) developed in the invention calculate how much heat the combi boiler should generate by measuring the external atmospheric temperature thanks to the sensor measuring atmospheric temperature (3) and accordingly operates the combi boiler for a certain period (Combi flame burning uptime), then stops the water pump of the combi boiler until a certain period when the heat requirement of the user will arise based on the atmospheric temperature as well as carrying out all processes in current combi boilers; in the model of combi boiler saving device, electrical current is delivered to the combi boiler for a certain period based on the atmospheric temperature; the combi boiler saving device, the main card (2) determines the operation and discontinuation (stopping all combi boiler equipment including water pump in saving device) interval of the combi boiler depending on the external atmospheric temperature and continues this process for infinite loop.

Thanks to the main card (2) that can be adapted into combi boilers manufactured newly increase energy efficiency by minimizing heat loss in combi boilers and also reduces the heat loss of combi boiler's chimney; it provides a critical energy saving thanks to the main card (2) by operating in two different modes via T1 button (9) and T2 button (10) at climatic transition phases; In spring and autumn when the external atmospheric temperature is slightly cool, as the temperature in return water decreases much due to the lowness of the energy quantity required to be generated by the combi boiler, the heat is absorbed much better by the return water in the combustion chamber within the combi boiler and the temperature of the chimney declines and the combi boiler's efficiency increases.

Current combi boilers operate with the principle of running the continuous water circulating pump, don't include the logic of stopping the water circulating pump for a short time depending on the atmospheric remperature and operating it, when the main card (2) in the invention developed is adapted into the current combi boilers, fulfills all functions of electronic cards, the electronic card in the invention additionally calculates the energy required to be generated by the combi boiler measuring the external atmospheric temperature thanks to the sensor measuring atmospheric temperature (3) and calculates the period when the user will need heat again, namely, how long the sleep mode will last while transmitting this energy to the radiators and provides energy saving in terms of natural gas and electricity consumption inactivating the water circulating motor of the combi boiler until the next heating period.

## Claims

1. A main card (2) unit externally electrically couplable to a gas combi boiler so as to selectively provide or interrupt electrical power to said gas combi boiler, said main card (2) selectively enabling operation of a water circulation pump of said gas combi boiler **characterized in that;**
said main card (2) unit is configured to calculate the amount of heat energy to be generated by the gas combi boiler depending on the atmospheric temperature information or operation program setting and operate the gas combi boiler for a certain time duration of blazing period upon termination of which the gas combi boiler and the water circulation pump thereof remains non-powered for a certain time duration until a subsequent heat generation and blazing period is initiated in the manner that period for non-powered state of the water circulation pump and heat generation and blazing period are either calculated based on the atmospheric temperature information or taken as predetermined periods according to manually set operation program setting;
said main card (2) unit is configured to calculate the time interval during which the non-powered state of said gas combi boiler remains active and the time interval during which the heat generation by blazing takes place;
said main card (2) unit is configured to operate the gas combi boiler in an interrupted manner, during operational periods of which the water circulation pump is operated during blazing period; and
said water circulating pump is deactivatable with a predetermined delay.

2. A main card (2) unit as set forth in Claim 1 **characterized in that** said period for non-powered state of the water circulation pump and heat generation and blazing period are determined depending both on atmospheric temperature information and manually set operationprogram setting.

3. A main card (2) unit as set forth in Claim 1 or 2 **characterized in that** said main card (2) comprises an atmospheric temperature sensor (3) effectuating periodically continuous temperature measurements.

4. A main card (2) unit as set forth in Claim 3 **characterized in that** said main card (2) unit is a unit connectable with a gas combi boiler over the power line.

5. A main card (2) unit as set forth in any preceeding Claim **characterized in that** said main card (2) unit can be in electrical connection with a water flow sensor such that information as to water flow in communication with the gas combi boiler during the sleep mode thereof is conveyed to said main card (2) unit upon which said main card (2) unit enables powering of said gas combi boiler.

6. A main card (2) unit as set forth in any preceeding Claim **characterized in that** said main card (2) unit comprises a plurality of climatic program setting buttons (9, 10), each one configured to activate a certain set of settings for the time durations of the blazing period, water circulation pump operational period and sleep mode period.

7. A gas combi boiler comprising a main card (2) unit as set forth in Claim 1.

8. A gas combi boiler as set forth in Claim 7 **characterized in that** said main card (2) unit is separately electrically installed into a free slot of the gas combi boiler.

9. A gas combi boiler as set forth in Claim 7 **characterized in that** said main card (2) unit is realized as an internal part of a main board of the gas combi boiler.

10. A gas combi boiler as set forth in Claim 7, 8 or 9, **characterized in that** a plurality of climate program setting buttons (9, 10) indicative of the time durations of the blazing period, water circulation pump operational period and sleep mode period settings are provided directly on the gas combi boiler.

11. A gas combi boiler as set forth in Claim 7 **characterized in that** said gas combi boiler comprises a button containing time relay start/stop function.

12. A main card (2) unit as set forth in Claim 6 **characterized in that** said plurality of climatic program setting buttons (9, 10) are configured as single rotary switch button.

13. A main card (2) unit as set forth in Claim 1 **characterized in that** main card (2) unit comprises a dedicated start and stop button to selectively deactivate said main card (2) unit for ensuring non-interrupted operation of said gas combi boiler to provide instantaneous heating.

14. A gas combi boiler as set forth in Claim 7, 8 or 9, **characterized in that** said gas combi boiler comprises a dedicated start and stop button.

## Patentansprüche

1. eine Hauptkarteneinheit (2), die extern elektrisch mit einem Gaskombikessel koppelbar ist, um dem Gaskombikessel selektiv elektrische Energie zuzuführen oder diese zu unterbrechen, wobei die Hauptkarte (2) selektiv den Betrieb einer Wasserumwälzpumpe des Gaskombikessels ermöglicht, **dadurch gekennzeichnet, dass**
die Hauptkarteneinheit (2) so konfiguriert ist, dass sie die vom Gaskombikessel zu erzeugende Wärmeenergiemenge in Abhängigkeit von der Umgebungstemperaturinformation oder der Einstellung des Betriebsprogramms berechnet und den Gaskombikessel für eine bestimmte Dauer der Zündperiode nach Beendigung betreibt, wodurch der Gaskombikessel und die Wasserumwälzpumpe für eine bestimmte Dauer stromlos bleiben, bis eine nachfolgende Wärmeerzeugungs- und Zündperiode in der Art und Weise eingeleitet wird, sodass die Periode für den stromlosen Zustand der Wasserumwälzpumpe und der Wärmeerzeugung und der Zündperiode entweder auf Basis der Information der Umgebungstemperatur berechnet oder als vorbestimmte Dauer gemäß der manuell eingestellten Einstellung des Betriebsprogramms übernommen wird.
die Hauptkarteneinheit (2) so konfiguriert ist, dass sie das Zeitintervall, in dem der stromlose Zustand des Gaskombikessels aktiv bleibt, und das Zeitintervall berechnet, in dem die Wärmeerzeugung durchs Zünden stattfindet;
die Hauptkarteneinheit (2) so konfiguriert ist, dass sie den Gaskombikessel in unterbrochener Weise während der Betriebsperiode betreibt, wodurch die Wasserumwälzpumpe während der Zündperiode betrieben wird; und
die Wasserumwälzpumpe mit einer vorbestimmten Verzögerung deaktivierbar ist.

2. die Hauptkarteneinheit (2) nach Anspruch 1, **dadurch gekennzeichnet, dass** die Perioden für den stromlosen Zustand der Wasserumwälzpumpe und die Wärmeerzeugung und die Zündperiode in Abhängigkeit sowohl von der Information über die Umgebungstemperatur als auch von der manuellen Einstellung des Betriebsprogramms bestimmt werden.

3. die Hauptkarteneinheit (2) nach Anspruch 1 oder 2, **dadurch gekennzeichnet, dass** die Hauptkarte (2) einen Umgebungstemperatursensor (3) aufweist, der periodisch kontinuierliche Temperaturmessungen bewirkt.

4. die Hauptkarteneinheit (2) nach Anspruch 3, **dadurch gekennzeichnet, dass** die Hauptkarteneinheit (2) eine Einheit ist, die über die Stromleitung mit einem Gaskombikessel verbindbar ist.

5. die Hauptkarteneinheit (2) nach einem der vorhergehenden Ansprüche, **dadurch gekennzeichnet, dass** die Hauptkarteneinheit (2) in elektrischer Verbindung mit einem Wasserdurchflusssensor stehen kann, so dass Informationen über den Wasserdurchfluss in Verbindung mit dem Gaskombikessel während der Ruhemodus stehen und dadurch die Übertragung zur Hauptkarteneinheit (2) erfolgt, wodurch die Hauptkarteneinheit (2) den Betrieb des Gaskombikessels ermöglicht.

6. die Hauptkarteneinheit (2) nach einem der vorhergehenden Ansprüche, **dadurch gekennzeichnet, dass** die Hauptkarteneinheit (2) eine Vielzahl von Klima-Programm-Einstelltasten (9, 10) umfasst, von denen jede so konfiguriert ist, dass ein bestimmter Einstellungssatz für die Dauer der Zündperiode, Betriebsperiode der Wasserumwälzpumpe und Ruhemodusperiode aktiviert wird.

7. Gaskombikessel mit einer Hauptkarteneinheit (2) nach Anspruch 1.

8. Gaskombikessel nach Anspruch 7, **dadurch gekennzeichnet, dass** die Hauptkarte separat elektrisch in einen freien Schlitz des Gaskombikessels eingebaut wird.

9. Gaskombikessel nach Anspruch 7, **dadurch gekennzeichnet, dass** die Hauptkarteeinheit als ein interner Teil einer Hauptplatine des Gaskombikessels durchgeführt wird.

10. Gaskombikessel nach Anspruch 7, 8 oder 9, **dadurch gekennzeichnet, dass** eine Vielzahl von Klimaprogramm-Einstelltasten (9, 10), die die Zeitdauern der Zündperiode, der Betriebsperiode der Wasserumwälzpumpe und
die Einstellungen der Ruhemodusperiode anzeigen, direkt am Gaskombikessel vorgesehen werden.

11. Gaskombikessel nach Anspruch 7, **dadurch gekennzeichnet, dass** der Gaskombikessel eine Taste umfasst, die eine Zeitrelais-Start / Stopp-Funktion enthält.

12. Hauptkarteneinheit (2) nach Anspruch 6, **dadurch gekennzeichnet, dass** die mehreren Klimaprogramm-Einstelltasten (9, 10) als eine einzelne Drehschaltertaste konfiguriert sind.

13. Hauptkarteneinheit (2) nach Anspruch 1, **dadurch gekennzeichnet, dass** die Hauptkarteneinheit eine zweckbestimmte Start- und Stopptaste umfasst, um die Hauptkarteneinheit (2) selektiv zu deaktivieren, um einen unterbrechungsfreien Betrieb des Gaskombikessels sicherzustellen und eine sofortige Heizung zu gewährleisten.

14. Gaskombikessel nach Anspruch 7, 8 oder 9, **dadurch gekennzeichnet, dass** der Gaskombikessel über eine eigene zweckbestimmte Start- und Stopp-Taste verfügt.

## Revendications

1. une unité de carte principale (2) pouvant être couplée électriquement de l'exterieur à une chaudière combi au gaz de façon à fournir ou interrompre sélectivement l'alimentation électrique de ladite chaudière combi au gaz, ladite carte principale (2) permettant de manière sélective le fonctionnement d'une pompe de circulation d'eau de ladite chaudière combi au gaz **caractérisée en ce que** ;
ladite unité de carte principale (2) est configurée pour calculer la quantité d'énergie thermique devant être générée par la chaudière combi au gaz en fonction des informations de température atmosphérique ou réglage du programme d'opération et faire fonctionner la chaudière combi au gaz pendant une certaine période de flambage à la fin de laquelle la chaudière combi au gaz et sa pompe de circulation d'eau restent non alimentées pendant une certaine durée jusqu'à ce qu'une période de génération ultérieure de chaleur et période de flambage soit initiée de façon à ce que cette période pour l'état non alimenté de la pompe de circulation d'eau et la période de génération de chaleur et de flambage soient calculées sur la base des informations de température atmosphérique ou pris comme des périodes prédéterminées en fonction du réglage du programme de fonctionnement défini manuellement;
ladite unité de carte principale (2) est configurée pour calculer l'intervalle de temps pendant lequel l'état non alimenté de ladite chaudière combi au gaz reste actif et l'intervalle de temps pendant lequel la génération de chaleur par flambage réalise;
ladite unité de carte principale (2) est configurée pour faire fonctionner la chaudière combi au gaz de manière interrompue, pendant les périodes de fonctionnement pendant lesquelles la pompe de circulation d'eau fonctionne pendant la période de flambage; et
ladite pompe de circulation d'eau peut être désactivée avec un retard prédéterminé.

2. Une unité de carte principale (2), telle qu'elle est énoncée dans la revendication 1, **caractérisée en ce que** ladite période pour l'état non alimenté de la pompe de circulation d'eau et la période de génération de chaleur et de flambage sont déterminées en fonction à la fois des informations sur la température atmosphérique et du réglage du programme de fonctionnement défini manuellement.

3. Unité de carte principale (2) telle qu'elle est énoncée dans la revendication 1 ou 2, **caractérisée en ce que** ladite carte principale (2) comprend un capteur de température atmosphérique (3) effectuant des mesures de température périodiques en continu.

4. Unité de carte principale (2) telle qu'elle est énoncée dans la revendication 3, **caractérisée en ce que** ladite unité de carte principale (2) est une unité pouvant être connectée à une chaudière combi au gaz sur la ligne d'alimentation.

5. Unité de carte principale (2) telle qu'elle est énoncée dans l'une quelconque des revendications précédentes, **caractérisée en ce que** ladite unité de carte principale (2) peut être connectée électriquement à un capteur de débit d'eau de telle sorte que des informations sur le débit d'eau en communication avec la chaudière combi au gaz pendant son mode veille sont acheminées vers ladite unité de carte principale (2) après quoi ladite unité de carte principale (2) permet d'alimenter ladite chaudière combi au gaz.

6. Unité de carte principale (2) telle qu'elle est énoncée dans l'une quelconque des revendications précédentes, **caractérisée en ce que** ladite unité de carte principale (2) comprend une pluralité de boutons de réglage de programme climatique (9, 10), chacun configuré pour activer un certain ensemble de réglages pour les durées de la période de flambage, de la période de fonctionnement de la pompe de circulation de l'eau et de la période en mode veille.

7. Une chaudière combi au gaz comprenant une unité de carte principale (2) telle qu'elle est énoncée dans la revendication 1.

8. Une chaudière combi au gaz telle qu'elle est énoncée dans la revendication 7, **caractérisée en ce que** ladite unité de carte principale (2) est installée électriquement d'une façon séparée dans un créneau libre de la chaudière combi au gaz.

9. Une Chaudière combi au gaz telle qu'elle est énoncée dans la revendication 7, **caractérisée en ce que** ladite unité de carte principale (2) est réalisée en tant qu'une partie interne d'un tableau principal de la chaudière combi au gaz.

10. Une Chaudière combi au gaz telle qu'elle est énoncée dans la revendication 7, 8 ou 9, **caractérisée en ce qu'**une pluralité de boutons de réglage de programme climatique (9, 10) indiquant les durées de la période de flambage, la période de fonctionnement de la pompe de circulation d'eau et les réglages de la période de veille sont fournis directement sur la chaudière combi au gaz.

11. Une Chaudière combi au gaz telle qu'elle est énoncée dans la revendication 7, **caractérisée en ce que** ladite chaudière combi au gaz comprend un bouton contenant une fonction de démarrage / arrêt du relais temporisé.

12. Une unité de carte principale (2) telle qu'elle est énoncée dans la revendication 6, **caractérisée en ce que** ladite pluralité de boutons de réglage de programme climatique (9, 10) sont configurés comme des simples commutateurs rotatifs.

13. Une unité de carte principale (2) telle qu'elle est énoncée dans la revendication 1, **caractérisée en ce que** l'unité de carte principale (2) comprend un bouton de démarrage et d'arrêt dédié pour désactiver sélectivement ladite unité de carte principale (2) afin de garantir le fonctionnement non interrompu de ladite chaudière combi au gaz afin de fournir un chauffage instantané.

14. Une chaudière combi au gaz telle qu'elle est énoncée dans la revendication 7, 8 ou 9, **caractérisée en ce que** ladite chaudière combi au gaz comprend un bouton de démarrage et d'arrêt dédié.
